**Europäisches Patentamt**

**European Patent Office**

**Office européen des brevets**

(19)

(11) **EP 1 471 398 A1**

(12) **EUROPÄISCHE PATENTANMELDUNG**

(43) Veröffentlichungstag:
 **27.10.2004 Patentblatt 2004/44**

(51) Int Cl.[7]: **G05B 13/04**

(21) Anmeldenummer: **03405291.0**

(22) Anmeldetag: **24.04.2003**

(84) Benannte Vertragsstaaten:
 **AT BE BG CH CY CZ DE DK EE ES FI FR GB GR
 HU IE IT LI LU MC NL PT RO SE SI SK TR**
 Benannte Erstreckungsstaaten:
 **AL LT LV MK**

(71) Anmelder: **ABB RESEARCH LTD.
 8050 Zürich (CH)**

(72) Erfinder:
 • **Gallestey, Eduardo Alvarez
 5522 Tägerig (CH)**

 • **Hovland, Geir
 5408 Ennetbaden (CH)**
 • **Stothert, Alec
 5408 Ennetbaden (CH)**
 • **von Hoff, Thomas
 8049 Zürich (CH)**

(74) Vertreter: **ABB Patent Attorneys
 c/o ABB Schweiz AG,
 Intellectual Property (CH-LC/IP),
 Brown Boveri Strasse 6
 5400 Baden (CH)**

(54) **Verfahren zum Betrieb eines Kalmanfilters sowie Vorrichtung zur Durchführung des Verfahrens**

(57) Es wird ein Verfahren zum Betrieb eines Kalmanfilters (1) angegeben, bei welchem erste Parameter ($q_{\eta_s}$) in Form einer ersten Kovarianzmatrix (Q), zweite Parameter ($r_p, r_\omega$) in Form einer zweiten Kovarianzmatrix (R), Messgrössen ($p, \omega$) in Form eines Messgrössenvektors ($\vec{y}$) oder Beobachtergrössen ($p, \omega$) in Form eines Beobachtergrössenvektors ($\vec{y}$) an den Eingang des Kalmanfilters (1) zugeführt werden, und bei welchem geschätzte Zustandsgrössen ($\eta_s, \rho, \omega$) in Form eines Zustandsgrössenvektors ($\vec{x}hat$) und zu den geschätzten Zustandsgrössen ($\eta_s, \rho, \omega$) zugehörige Fehlergrössen in Form eines Fehlergrössenvektors ($\vec{e}$) ausgegeben werden. Zur Verbesserung der geschätzten Zustandsgrössen ($\eta_s, \rho, \omega$) und zur Verringerung der Fehlergrössen werden die ersten Parameter ($q_{\eta_s}$) der ersten Kovarianzmatrix (Q) und die zweiten Parameter ($r_p, r_\omega$) der zweiten Kovarianzmatrix (R) derart fortlaufend bestimmt, dass bestimmbare Eigenschaften einer jeden Fehlergrösse jeweils auf einen Sollwert ausgeregelt werden. Darüber hinaus wir eine Vorrichtung zur Durchführung des Verfahrens angegeben.

Fig.1

EP 1 471 398 A1

**Beschreibung**

**Technisches Gebiet**

Die Erfindung bezieht sich auf das Gebiet der Automatisierungstechnik. Sie geht aus von einem Verfahren zum Betrieb eines Kalmanfilters sowie von einer Vorrichtung zur Durchführung des Verfahrens gemäss den Oberbegriffen der unabhängigen Ansprüche.

**Stand der Technik**

Kalmanfilter werden heute in einer Fülle von zu regelnden Systemen eingesetzt. Der Einsatz eines Kalmanfilters ist vor allem dann sinnvoll, wenn Systemzustände nicht gemessen oder durch geeignete Beobachter ermittelt werden können, sondern nur aus ermittelbaren Messgrössen oder Beobachtergrössen bestimmt werden können. Bei herkömmlichen Vorrichtungen zur Durchführung eines Verfahrens zum Betrieb eines Kalmanfilters sind dem Kalmanfilter eingangsseitig erste Parameter in Form einer ersten Kovarianzmatrix zugeführt. Desweiteren sind dem Kalmanfilter eingangsseitig zweite Parameter in Form einer zweiten Kovarianzmatrix zugeführt. Darüber hinaus sind dem Kalmanfilter ermittelbare Messgrössen des Systems in Form eines Messgrössenvektors oder ermittelbare Beobachtergrössen in Form eines Beobachtergrössenvektors an dessen Eingang zugeführt. Das Kalmanfilter gibt auf die vorstehend genannten Eingangsgrössen hin geschätzte Zustandsgrössen in Form eines Zustandsgrössenvektors und zu den geschätzten Zustandsgrössen zugehörigen Fehlergrössen in Form eines Fehlergrössenvektors aus, wobei die geschätzten Zustandsgrössen und die zu den geschätzten Zustandsgrössen zugehörigen Fehlergrössen dann am Ausgang des Kalmanfilters anliegen.

Um möglichst genaue geschätzte Zustandsgrössen mit möglichst geringen zugehörigen Fehlergrössen zu erhalten, müssen die ersten Parameter der ersten Kovarianzmatrix und die zweiten Parameter der zweiten Kovarianzmatrix genau eingestellt werden. Dazu sind verschiedene Verfahren bekannt, deren grundlegende Idee darin besteht, über einen gewissen Zeitraum die Messgrössen oder Beobachtergrössen zu variieren und daraus die ersten Parameter der ersten Kovarianzmatrix und die zweiten Parameter der zweiten Kovarianzmatrix zu schätzen. Die so geschätzten ersten und zweiten Parameter werden dann dem Kalmanfilter eingangsseitig zugeführt und eingestellt.

Problematisch bei einer solchen Ermittlung der ersten und zweiten Parameter ist, dass bei einem komplizierten und zudem nichtlinearen Regelstrecke des Systems, bei dem ein Kalmanfilter gängigerweise angewendet wird, die Abschätzung der ersten und zweiten Parameter schwierig, ungenau und somit fehlerbehaftet ist, d.h. das Kalmanfilter bei der Abschätzung der gewünschten Zustandsgrössen einen grosse zugehörige Fehlergrössen generiert. Solche mit zugehörigen grossen Fehlergrössen behaftetet geschätzte Zustandsgrössen des Kalmanfilters treten auch dann auf, wenn die einmal ermittelten ersten und zweiten Parameter nicht mehr den aktuellen Messgrössen oder Beobachtergrössen entsprechen, welche sich z.B. durch Alterung des Systems und der Regelstrecke verändern können. Die vom Kalmanfilter genierten geschätzten Zustandsgrössen sind dann grösstenteils unbrauchbar.

**Darstellung der Erfindung**

Aufgabe der Erfindung ist es deshalb, ein Verfahren zum Betrieb eines Kalmanfilters und eine Vorrichtung zur Durchführung des Verfahrens anzugeben, so dass durch das Kalmanfilter abgeschätzte Zustandsgrössen eines Systems einen möglichst kleinen Fehler auch bei einem komplizierten System oder bei Veränderung des Systems beispielsweise infolge Alterung aufweisen. Diese Aufgabe wird durch die Merkmale des Anspruchs 1 und des Anspruchs 8 gelöst. In den abhängigen Ansprüchen sind vorteilhafte Weiterbildungen der Erfindung angegeben.

Beim erfindungsgemässen Verfahren zum Betrieb eines Kalmanfilters werden erste Parameter in Form einer ersten Kovarianzmatrix, zweite Parameter in Form einer zweiten Kovarianzmatrix, Messgrössen in Form eines Messgrössenvektors oder Beobachtergrössen in Form eines Beobachtergrössenvektors an den Eingang des Kalmanfilters zugeführt. Weiterhin werden geschätzte Zustandsgrössen in Form eines Zustandsgrössenvektors und zu den geschätzten Zustandsgrössen zugehörigen Fehlergrössen in Form eines Fehlergrössenvektors ausgegeben. Erfindungsgemäss werden die ersten Parameter der ersten Kovarianzmatrix und die zweiten Parameter der zweiten Kovarianzmatrix derart fortlaufend bestimmt, dass bestimmbare Eigenschaften einer jeden Fehlergrösse jeweils auf einen Sollwert ausgeregelt werden. Durch die fortlaufende Bestimmung der dem Kalmanfilter zugeführten ersten und zweiten Parameter, derart, dass bestimmbare Eigenschaften einer jeden Fehlergrösse jeweils auf einen Sollwert ausgeregelt werden, ist vorteilhaft sichergestellt, dass die ersten und zweiten Parameter bei einem komplizierten System oder bei einem sich ändernden System im Unterschied zum Stand der Technik stets nachgeführt werden und sich damit ein möglichst kleiner Fehler der vom Kalmanfilter abgeschätzten Zustandsgrössen ergibt. Ein aus dem Stand der Technik bekanntes schwieriges, ungenaues und damit fehlerbehaftetes Abschätzen der ersten und zweiten Parameter und ein damit einhergehendes Ausgeben der zu den fehlerhaften geschätzten Zustandsgrössen zugehörigen grossen Fehlergrössen kann somit erfolgreich vermieden werden. Insgesamt lässt sich der Einstellungsaufwand der ersten und zweiten Parameter erheblich verringern und somit Kosten und Zeit einsparen. Weiterhin wird die Genauigkeit der geschätzten Zustandsgrössen aufgrund der erzielten geringen zugehörigen Fehlergrössen massgeblich verbessert, wodurch sich das mit dem Kalmanfilter verbundene System einfach, stabil und somit zuverlässig betreiben lässt.

Bei der erfindungsgemässen Vorrichtung zur Durchführung des Verfahrens ist ein Regler vorgesehen, welchem die Fehlergrössen eingangsseitig zugeführt sind, wobei der Regler die ersten Parameter der ersten Kovarianzmatrix und die zweiten Parameter der zweiten Kovarianzmatrix derart fortlaufend bestimmt, dass bestimmbare Eigenschaften einer jeden Fehlergrösse jeweils auf einen am Eingang des Reglers in Form eines Sollwertvektors zugeführten Sollwert ausgeregelt werden. Durch den eingesetzten und der vorstehend erläuterten Ausregelung dienenden Regler ist eine einfache, robuste und kostengünstige Vorrichtung zur Durchführen des Verfahrens erzielt, welche das erfindungsgemässe Verfahren hocheffizient ausführt. Die Vorrichtung lässt sich weiterhin aufgrund ihrer Einfachheit problemlos realisieren sowie in bereits bestehende Systeme, in denen Kalmanfilter eingesetzt werden, integrieren.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1    ein System mit einer ersten Ausführungsform einer erfindungsgemässen Vorrichtung zur Durchführung eines Verfahrens zum Betrieb eines Kalmanfilters und

Fig. 2    ein weiteres System mit einer zweiten Ausführungsform der erfindungsgemässen Vorrichtung zur Durchführung eines Verfahrens zum Betrieb eines Kalmanfilters.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

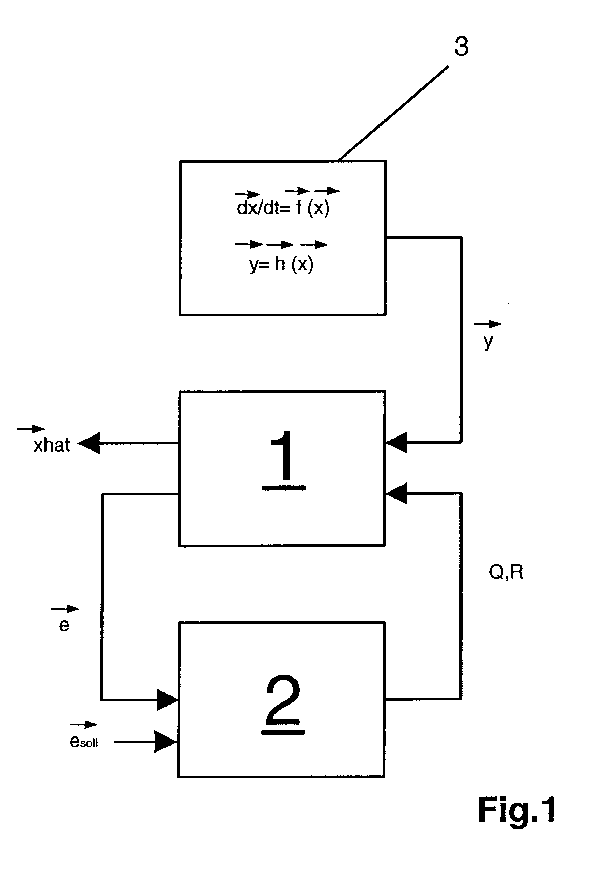

In Fig. 1 ist ein System mit einer Regelstrecke 3, beispielsweise ein Dampfturbinensystem mit einer zu regelnden Dampfturbine, mit einer ersten Ausführungsform einer erfindungsgemässen Vorrichtung zur Durchführung eines Verfahrens zum Betrieb eines Kalmanfilters dargestellt. Allgemein kann ein solches System mit der Regelstrecke 3 wie folgt beschrieben werden:

$$\frac{\overrightarrow{dx}}{dt} = f(\overrightarrow{x}) + \overrightarrow{w}$$

$$\overrightarrow{y} = h(\overrightarrow{x}) + \overrightarrow{v},$$

wobei $\overrightarrow{x}$ ein Zustandsgrössenvektor des Systems, $\overrightarrow{w}$ der zugehörige Systemrauschgrössenvektor der Zustandsgrössen und $\overrightarrow{f}$ eine das System beschreibende Funktion ist. Weiterhin ist $\overrightarrow{y}$ ein Messgrössenvektor ermittelbarer Messgrössen beziehungsweise eine Beobachtergrössevektor ermittelbarer Beobachtergrössen. Mit $\overrightarrow{v}$ ist ein Messgrössenrauschvektor bezüglich der Messgrössen beziehungsweise ein Beobachterrauschgrössenvektor bezüglich der Beobachtergrössen bezeichnet. Darüber hinaus ist mit $\overrightarrow{h}$ eine Funktion angegeben, nach welcher die Mess- beziehungsweise Beobachtergrössen in Abhängigkeit der Zustandsgrössen des Systems folgen. Im folgenden wird nun die Erfindung anhand eines konkreten Dampfturbinensystems mit einem Kalmanfilter detailliert beschrieben. Das Dampfturbinenturbinensystem lässt sich wie folgt beschreiben:

$$\frac{d\vec{x}}{dt} = \begin{pmatrix} \dfrac{d\omega}{dt} \\ \dfrac{d\rho}{dt} \\ \dfrac{d\eta_s}{dt} \end{pmatrix} = \underbrace{\begin{pmatrix} Power(\rho, p_1(t)) - Demand(t) \\ flow_{in}(t) - flow \\ 0 \end{pmatrix}}_{\vec{f}} + \underbrace{\begin{pmatrix} 0 \\ 0 \\ w_{\eta_s} \end{pmatrix}}_{\vec{w}}$$

$$\vec{y} = \begin{pmatrix} p \\ \omega \end{pmatrix} = \underbrace{\begin{pmatrix} const\ \rho^n \\ \omega \end{pmatrix}}_{\vec{h}} + \underbrace{\begin{pmatrix} v_p \\ v_\omega \end{pmatrix}}_{\vec{v}}$$

wobei $\omega$ die Rotorwinkelgeschwindigkeit der Dampfturbine, *Power* das Drehmoment der Dampfturbine und *Demand* das Lastmoment an der Dampfturbine ist. Desweiteren ergibt sich die Dampfströmrate *flow* gemäss der folgenden Formel:

$$flow = const\sqrt{1 - (\frac{p_1(t)}{p})^{\frac{n+1}{n}}},$$

wobei $p_1$ der zeitabhängige Dampfauslassdruck ist und $p$ der Dampfdruck in der Dampfturbine ist. Mit *flow_{in} (t)* ist die zeitabhängige Dampfeinströmrate bezeichnet, welche zum Beispiel als Funktion der Messgrössen Dampfdruck $p$ und Rotorwinkelgeschwindigkeit $\omega$ beschrieben werden kann. Mit $n$ ist zudem eine Zählvariable bezeichnet. Darüber hinaus berechnet sich das Drehmoment der Dampfturbine *Power* gemäss der nachfolgenden Formel:

$$Power = \eta_s\ flow\ \frac{\gamma}{\gamma-1}\frac{p}{\rho}\left(1 - (\frac{p_1(t)}{p})^{\frac{\gamma-1}{\gamma}}\right)$$

wobei $p$ die Dampfdichte in der Dampfturbine und $\eta_s$ der Wirkungsgrad der Dampfturbine ist. In dem beispielhaften Dampfturbinensystem sind der Dampfdruck $p$ und die Rotorwinkelgeschwindigkeit $\omega$, wie vorstehend bereits erwähnt, Messgrössen des Messgrössenvektors $\vec{y}$. Mit $\gamma$ ist weiterhin eine Zählvariable bezeichnet. Würden der Dampfdruck $p$ und die Rotorwinkelgeschwindigkeit $\omega$ nicht als Messgrössen zur Verfügung stehen, jedoch durch eine Beobachtung ermittelbar, so wären der Dampfdruck $p$ und die Rotorwinkelgeschwindigkeit $\omega$ Beobachtergrössen und $\vec{y}$ wäre dann der zugehörige Beobachtergrössenvektor.

Schliesslich sind mit $v_p, v_\omega$ die Messrauschgrössen bezüglich der Messgrössen Dampfdruck $p$, mit $\omega$ die Rotorwinkelgeschwindigkeit und mit $w_{\eta_s}$ das Systemrauschen bezüglich des Wirkungsgrades $\eta_s$ bezeichnet.

Bezüglich des Systemrauschgrössenvektors $\vec{w}$ der Zustandsgrösse Wirkungsgrad $\eta_s$ und des Messgrössenrauschvektors $\vec{v}$ der Messgrössen Dampfdruck $p$ und Rotorwinkelgeschwindigkeit $\omega$ benötigt das Kalmanfilter gemäss Fig. 1 jeweils eine zugehörige Charakteristik, welche bezüglich der Zustandsgrösse Wirkungsgrad $\eta_s$ in Form eines ersten Parameters $q_{\eta_s}$ und bezüglich der Messgrössen Dampfdruck $p$ und Rotorwinkelgeschwindigkeit $\omega$ in Form von zweiten Parametern $r_p, r_\omega$ vorliegen muss. Gemäss Fig. 1 sind nun allgemein bei der erfindungsgemässen Vorrichtung zur Durchführung eines Verfahrens zum Betrieb des Kalmanfilters 1 diesem Kalmanfilter 1 eingangsseitig erste Parameter $q_{\eta_s}$ in Form einer ersten Kovarianzmatrix Q, zweite Parameter $r_p, r_\omega$ in Form einer zweiten Kovarianzmatrix R und die Messgrössen Dampfdruck $p$ und Rotorwinkelgeschwindigkeit $\omega$ in Form des Messgrössenvektors $\vec{y}$, oder bei Beobachtergrössen in Form des Beobachtergrössenvektors $\vec{y}$, zugeführt. Gemäss dem Beispiel des Dampfturbinensystems ergibt sich demnach die erste Kovarianzmatrix Q und die zweite Kovarianzmatrix R wie folgt nach der Formel:

$$Q = \begin{pmatrix} 0 & 0 & 0 \\ 0 & 0 & 0 \\ 0 & 0 & q_{\eta_s} \end{pmatrix}, \quad R = \begin{pmatrix} r_p & 0 \\ 0 & r_\omega \end{pmatrix}$$

Das Kalmanfilter 1 gibt dann gemäss Fig. 1 ausgangsseitig geschätzte Zustandsgrössen in Form eines Zustandsgrössenvektors $\vec{x}hat$ und zu den geschätzten Zustandsgrössen zugehörigen Fehlergrössen in Form eines Fehlergrössenvektors $\vec{e}$ aus, welche am Ausgang des Kalmanfilters 1 anliegen. Die vorstehend genannten Fehlergrössen sind dabei die Elemente des Fehlergrössenvektors $\vec{e}$. Desweiteren gibt das Kalmanfilter 1 den Zustandsgrössenvektor $\vec{x}hat$ für das beispielhaft beschriebene Gasturbinensystem wie folgt aus:

$$\vec{x}hat = \begin{pmatrix} \eta_s \\ \rho \\ \omega \end{pmatrix}$$

Die im Beispiel relevante Zustandsgrösse, die für den Dampfturbinenprozess wichtig ist, ist der Wirkungsgrad $\eta_s$. Die weiterhin durch das Kalmanfilter 1 geschätzten Zustandsgrössen Dampfdichte ρ in der Dampfturbine und Rotorwinkelgeschwindigkeit ω sind, wie vorstehend erwähnt, auch durch die Messgrössen $p,$ ω und somit durch den Messgrössenvektor $\vec{y}$ bereits bekannt.

Darüber hinaus bestimmt das Kalmanfilter 1 den Fehlergrössenvektor $\vec{e}$ gemäss folgender Formel:

$$\vec{e} = \vec{y} - \vec{h}(\vec{x}hat)$$

Erfindungsgemäss werden beim Verfahren zum Betrieb des Kalmanfilters 1 allgemein die ersten Parameter $q_{\eta_s}$ der ersten Kovarianzmatrix Q und die zweiten Parameter $r_p, r_\omega$ der zweiten Kovarianzmatrix R derart fortlaufend bestimmt, dass bestimmbare Eigenschaften einer jeden Fehlergrösse jeweils auf einen Sollwert ausgeregelt werden. Vorteilhaft wird als bestimmbare Eigenschaft der Mittelwert der jeweiligen Fehlergrösse und die Autokorrelation der jeweiligen Fehlergrösse ausgewählt, wobei als Sollwert der Mittelwert der jeweiligen Fehlergrösse im wesentlichen Null und die Autokorrelation der jeweiligen Fehlergrösse im wesentlichen Null gewählt wird. In diesem Fall stellt sich als Fehlergrösse weisses Rauschen ein, wobei dann, wie vorstehend erläutert, die ersten Parameter $q_{\eta_s}$ der ersten Kovarianzmatrix Q und die zweiten Parameter $r_p, r_\omega$ der zweiten Kovarianzmatrix R daraufhin fortlaufend bestimmt werden. Der Mittelwert des Fehlergrössenvektors $\vec{e}$ ist allgemein folgendermassen definiert:

$$mean(\vec{e})(t) = \frac{1}{M} \sum_{\tau=t-M+1}^{t} \vec{e}^T(\tau) A(\tau) \vec{e}(\tau),$$

wobei $A(t)$ die Kovarianzmatrix von $\vec{e}(t)$, welche vom Kalmanfilter 1 zum Fehlergrössenvektor $\vec{e}$ mitberechnet wird, $M$ die Anzahl an Daten der Messgrössen oder Beobachtergrössen, $t$ eine variable Anzahl an diskreten Zeitpunkten und $\tau$ eine Zählvariable ist. Desweiteren ist die Autokorrelation des Fehlergrössenvektors $\vec{e}$ allgemein folgendermassen definiert:

$$xcorr(\vec{e})(t) = \frac{1}{mM} \sum_{\tau=t-M+1}^{t} \left( \sum_{i=1}^{m} \vec{e}_i(\tau) \vec{e}_i(\tau) \right),$$

wobei m eine Dimensionsvariable und $i$ eine Zählvariable ist.

Gegenüber der vorstehend erwähnten Fehlergrösse als weisses Rauschen ist es auch denkbar, dass als Fehlergrösse farbiges Rauschen mit einer vorgebbaren Bandbreite erwünscht ist. In diesem Fall ist dann der Sollwert der bestimmbaren Eigenschaften einer jeden Fehlergrösse, insbesondere der Sollwert des Mittelwertes der Fehlergrösse und der Sollwert der Autokorrelation der Fehlergrösse, entsprechend einzustellen. Es versteht sich, das es sich beim jeweiligen Sollwert um jeweils ein Element eines Sollwertvektors $\vec{e}_{soll}$ handelt. Durch die fortlaufende Bestimmung der dem Kalmanfilter 1 zugeführten ersten und zweiten Parameter $q_{\eta_s}$ beziehungsweise $r_p, r_\omega$, derart, dass bestimmbare Eigenschaften einer jeden Fehlergrösse jeweils auf einen Sollwert ausgeregelt werden, kann sichergestellt werden, dass die Parameter $q_{\eta_s}, r_p, r_\omega$ bei einem komplizierten System, wie bei dem beispielhaft erläuterten Dampfturbinensystem, oder bei einem sich ändernden System stets nachgeführt werden und sich damit ein möglichst kleiner Fehler der vom Kalmanfilter 1 abgeschätzten Zustandsgrössen $\eta_s$, $\rho$, $\omega$ ergibt. Ein schwieriges, ungenaues und damit fehlerbehaftetes Abschätzen der ersten und zweiten Parameter $q_{\eta_s}$, $r_p$, $r_\omega$ und ein damit einhergehendes Ausgeben der zu den fehlerhaften geschätzten Zustandsgrössen $\eta_s$, $p$, $\omega$ zugehörigen grossen Fehlergrössen kann somit erfolgreich vermieden werden. Insgesamt lässt sich der übliche Einstellungsaufwand der ersten und zweiten Parameter $q_{\eta_s}$, $r_p$, $r_\omega$ erheblich verringern und somit Kosten und Zeit einsparen. Zudem wird die Genauigkeit der geschätzten Zustandsgrössen $\eta_s$, $\rho$, $\omega$ aufgrund der erzielten geringen zugehörigen Fehlergrössen massgeblich verbessert, wodurch sich das mit dem Kalmanfilter verbundene System einfach, stabil und somit zuverlässig betreiben lässt.

Bei der erfindungsgemässen Vorrichtung zur Durchführung des Verfahrens gemäss Fig. 1 ist ein Regler 2 vorgesehen, welchem die Fehlergrössen eingangsseitig zugeführt sind, wobei der Regler 2 allgemein die ersten Parameter $q_{\eta_s}$ der ersten Kovarianzmatrix Q und die zweiten Parameter $r_p, r_\omega$, der zweiten Kovarianzmatrix R nach dem erfindungsgemässen Verfahren derart fortlaufend bestimmt, dass bestimmbare Eigenschaften einer jeden Fehlergrösse jeweils auf einen am Eingang des Reglers 2 in Form des Sollwertvektors $\vec{e}_{soll}$ zugeführten Sollwert ausgeregelt werden. Mittels des der vorstehend erläuterten Ausregelung dienenden Reglers 2 ist eine einfache, robuste und kostengünstige Vorrichtung realisiert, welche das erfindungsgemässe Verfahren hocheffiziente ausführt. Vorteilhaft ist bei der erfindungsgemässen Vorrichtung als bestimmbare Eigenschaft der Mittelwert der jeweiligen Fehlergrösse und die Autokorrelation der jeweiligen Fehlergrösse ausgewählt, wobei als Sollwert der Mittelwert der jeweiligen Fehlergrösse im wesentlichen Null und die Autokorrelation der jeweiligen Fehlergrösse im wesentlichen Null gewählt ist. In diesem Fall stellt sich als Fehlergrösse, wie bereits beim erfindungsgemässen Verfahren beschrieben, weisses Rauschen ein, wobei dann der Regler 2 die ersten Parameter $q_{\eta_s}$ der ersten Kovarianzmatrix Q und die zweiten Parameter $r_p, r_\omega$ der zweiten Kovarianzmatrix R daraufhin fortlaufend bestimmt werden.

Es hat sich als besonders vorteilhaft erwiesen, dass beim erfindungsgemässen Verfahren beziehungsweise bei der erfindungsgemässen Vorrichtung zur Durchführung des Verfahrens die Ausregelung nach einer selbsteinstellenden Propotional-Integral-Differential-Regelcharakteristik erfolgt, d.h. dass der Regler 2 eine selbsteinstellende Propotional-Integral-Differential-Regelcharakteristik aufweist. Dabei konfiguriert sich ein derart ausgebildeter Regler 2 vor dem eigentlichen Betrieb des Systems selbst durch Ausgabe ausgewählten Reglersignale an das System und einer nachfolgenden Aufzeichnung einer Systemantwort daraufhin vom System.

Alternativ dazu ist es auch denkbar, dass die Ausregelung nach einer adaptiven nichtlinearen Regelcharakteristik erfolgt, d.h. dass der Regler 2 eine adaptive nichtlineare Regelcharakteristik aufweist, welche bessere Regeleigenschaften bezüglich Stabilität und Ausregelzeit gegenüber einer vorstehend genannten selbsteinstellenden Propotional-Integral-Differential-Regelcharakteristik aufweist.

Eine weitere Alternative besteht darin, dass die Ausregelung nach einer adaptiven Fuzzy-Logik-Regelcharakteristik erfolgt, d.h. der Regler 2 eine adaptive Fuzzy-Logik-Regelcharakteristik aufweist. Vorteilhaft können bei einer derartigen Regelcharakteristik allgemein Messgrössen beziehungsweise Beobachtergrössen mit eingebunden werden, die auf die Erfahrung oder Intuition des Experten beruhen, und somit die Regeleigenschaften verbessert werden.

Es ist aber auch möglich, dass die Ausregelung nach einer Regelcharakteristik basierend auf neuronalen Netzen erfolgt. Der Regler 2 weist dann in diesem Fall eine Regelcharakteristik basierend auf neuronalen Netzen auf. Vorteilhaft weist ein Regler 2 mit einer solchen Regelcharakteristik gegenüber einem Regler 2 mit einer vorstehend genannten selbsteinstellenden Propotional-Integral-Differential-Regelcharakteristik bessere selbsteinstellende Eigenschaften auf, wodurch die Regeleigenschaften insgesamt verbessert werden können.

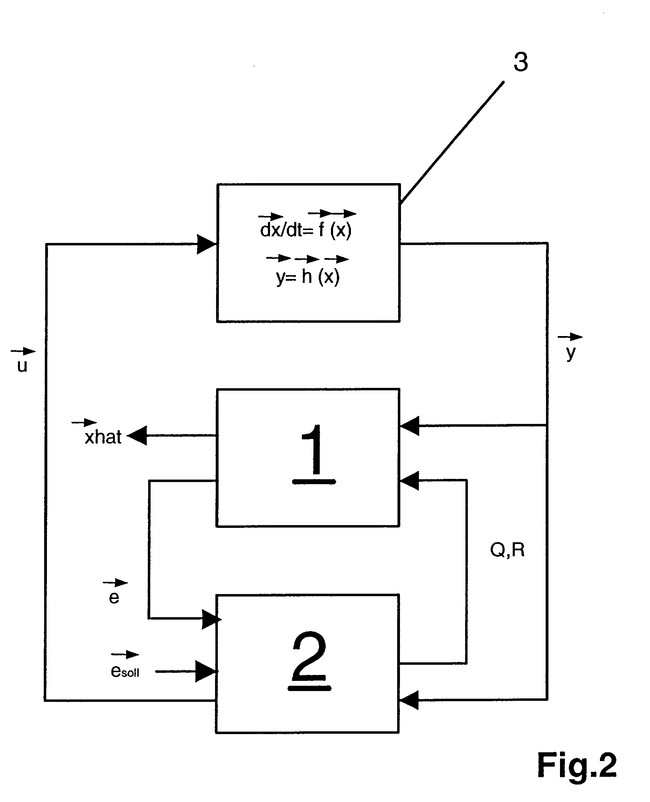

In Fig. 2 ist ein System mit einer Regelstrecke 3, beispielsweise ein Dampfturbinensystem mit einer zu regelnden Dampfturbine, mit einer zweiten Ausführungsform einer erfindungsgemässen Vorrichtung zur Durchführung eines Verfahrens zum Betrieb eines Kalmanfilters dargestellt. Das System gemäss Fig. 2 unterscheidet sich vom System gemäss Fig. 1 darin, dass eine Rückkopplung vom Regler 2 zur Regelstrecke 3 vorgesehen ist, wobei am Ausgang des Reglers 3 vom Regler 3 generierte Stellgrössen in Form eines Stellgrössenvektors $\vec{u}$ ausgegeben werden und anliegen. Mittels der Rückkopplung werden der Regelstrecke 3 diese Stellgrössen in Form des Stellgrössenvektors $\vec{u}$ zugeführt, um die Regelstrecke zusätzlich zu beeinflussen. Dies ist dann notwendig, wenn die Regelstrecke 3 beispielsweise nicht vollständig durch die vorstehend beim Beispiel des Dampfturbinensystems angegeben Formel

$$\frac{\overrightarrow{dx}}{dt} = f(\overrightarrow{x}) + \overrightarrow{w}$$

$$\overrightarrow{y} = h(\overrightarrow{x}) + \overrightarrow{v},$$

beschrieben werden kann, d.h. wenn im Beispiel des Dampfturbinensystems die Dampfeinströmrate $flow_{in}$ (t) nicht als Funktion der Messgrössen Dampfdruck $p$ und Rotorwinkelgeschwindigkeit $\omega$ beschrieben werden kann.

Es versteht sich, dass die Erfindung auch für nichtlineare Systeme in Verbindung mit erweiterten Kalmanfilters angewendet werden kann.

**Bezugszeichenliste**

1     Kalmanfilter
2     Regler
3     Regelstrecke

**Patentansprüche**

1. Verfahren zum Betrieb eines Kalmanfilters (1), mit den Schritten
Zuführen erster Parameter ($q_{\eta_s}$) in Form einer ersten Kovarianzmatrix (Q) an den Eingang des Kalmanfilters (1),
Zuführen zweiter Parameter ($r_p, r_\omega$) in Form einer zweiten Kovarianzmatrix (R) an den Eingang des Kalmanfilters (1)
Zuführen von Messgrössen ($p, \omega$) in Form eines Messgrössenvektors ($\overrightarrow{y}$) oder von Beobachtergrössen ($p, \omega$) in Form eines Beobachtergrössenvektors ($\overrightarrow{y}$) an den Eingang des Kalmanfilters (1),
Ausgeben geschätzter Zustandsgrössen ($\eta_s, \rho, \omega$) in Form eines Zustandsgrössenvektors ($\overrightarrow{x}\,hat$ ), und
Ausgeben von zu den geschätzten Zustandsgrössen ($\eta_s, \rho, \omega$) zugehörigen Fehlergrössen in Form eines Fehlergrössenvektors ($\overrightarrow{e}$), **dadurch gekennzeichnet,**
**dass** die ersten Parameter ($q_{\eta_s}$) der ersten Kovarianzmatrix (Q) und die zweiten Parameter ($r_p, r_\omega$) der zweiten Kovarianzmatrix (R) derart fortlaufend bestimmt werden, dass bestimmbare Eigenschaften einer jeden Fehlergrösse jeweils auf einen Sollwert ausgeregelt werden.

2. Verfahren nach Anspruch 1, **dadurch gekennzeichnet, dass** als bestimmbare Eigenschaft der Mittelwert der jeweiligen Fehlergrösse und die Autokorrelation der jeweiligen Fehlergrösse ausgewählt wird, und
dass als Sollwert der Mittelwert der jeweiligen Fehlergrösse im wesentlichen Null und die Autokorrelation der jeweiligen Fehlergrösse im wesentlichen Null gewählt wird.

3. Verfahren nach Anspruch 1 oder 2, **dadurch gekennzeichnet, dass** die Ausregelung nach einer selbsteinstellenden Propotional-Integral-Differential-Regelcharakteristik erfolgt.

4. Verfahren nach Anspruch 1 oder 2, **dadurch gekennzeichnet, dass** die Ausregelung nach einer adaptiven nichtlinearen Regelcharakteristik erfolgt.

5. Verfahren nach Anspruch 1 oder 2, **dadurch gekennzeichnet, dass** die Ausregelung nach einer adaptiven Fuzzy-Logik-Regelcharakteristik erfolgt.

6. Verfahren nach Anspruch 1 oder 2, **dadurch gekennzeichnet** die Ausregelung nach einer Regelcharakteristik basierend auf neuronalen Netzen erfolgt.

7. Verfahren nach einem der vorherigen Ansprüche, dass Stellgrössen in Form eines Stellgrössenvektors ($\overrightarrow{u}$) zur Beeinflussung einer Regelstrecke (3) generiert und ausgegeben werden.

8. Vorrichtung zur Durchführung eines Verfahrens zum Betrieb eines Kalmanfilters, bei welchem Kalmanfilter (1) eingangsseitig erste Parameter ($q_{\eta_s}$) in Form einer ersten Kovarianzmatrix (Q), zweite Parameter ($r_p, r_\omega$) in Form einer zweiten Kovarianzmatrix (R) und Messgrössen ($p, \omega$) in Form eines Messgrössenvektors ($\overrightarrow{y}$) oder Beobach-

tergrössen *(p ,ω)* in Form eines Beobachtergrössenvektors *($\vec{y}$)* zugeführt sind, und

bei welchem Kalmanfilter (1) ausgangsseitig geschätzte Zustandsgrössen $(\eta_s, \rho, \omega)$ in Form eines Zustandsgrössenvektors *($\vec{x}$hat)* und zu den geschätzten Zustandsgrössen $(\eta_s, \rho, \omega)$ zugehörigen Fehlergrössen in Form eines Fehlergrössenvektors *($\vec{e}$)* anliegen,

**dadurch gekennzeichnet,**

**dass** ein Regler (2) vorgesehen ist, welchem die Fehlergrössen eingangsseitig zugeführt sind, wobei der Regler (2) die ersten Parameter *($q_{\eta_s}$)* der ersten Kovarianzmatrix (Q) und die zweiten Parameter *($r_p, r_\omega$)* der zweiten Kovarianzmatrix (R) derart fortlaufend bestimmt, dass bestimmbare Eigenschaften einer jeden Fehlergrösse jeweils auf einen am Eingang des Reglers (2) in Form eines Sollwertvektors *($\vec{e}_{soll}$)* zugeführten Sollwert ausgeregelt werden.

9. Vorrichtung nach Anspruch 8, **dadurch gekennzeichnet, dass** als bestimmbare Eigenschaft der Mittelwert der jeweiligen Fehlergrösse und die Autokorrelation der jeweiligen Fehlergrösse ausgewählt ist, und dass als Sollwert der Mittelwert der jeweiligen Fehlergrösse im wesentlichen Null und die Autokorrelation der jeweiligen Fehlergrösse im wesentlichen Null gewählt ist.

10. Vorrichtung nach Anspruch 8 oder 9, **dadurch gekennzeichnet, dass** der Regler (2) eine selbsteinstellende Propotional-Integral-Differential-Regelcharakteristik aufweist.

11. Vorrichtung nach Anspruch 8 oder 9, **dadurch gekennzeichnet, dass** der Regler (2) eine adaptive nichtlineare Regelcharakteristik aufweist.

12. Vorrichtung nach Anspruch 8 oder 9, **dadurch gekennzeichnet, dass** der Regler (2) eine adaptive Fuzzy-Logik-Regelcharakteristik aufweist.

13. Vorrichtung nach Anspruch 8 oder 9, **dadurch gekennzeichnet, dass** der Regler (2) eine Regelcharakteristik basierend auf neuronalen Netzen aufweist.

14. Vorrichtung nach einem der Ansprüche 8 bis 13, **dadurch gekennzeichnet, dass** der Regler (2) Stellgrössen in Form eines Stellgrössenvektors *($\vec{u}$)* zur Beeinflussung einer Regelstrecke (3) generiert, wobei die Stellgrössen am Ausgang des Reglers anliegen.

3

$$\vec{dx}/dt = \vec{f}(\vec{x})$$

$$\vec{y} = \vec{h}(\vec{x})$$

$\vec{y}$

$\vec{xhat}$ ← **1**

Q,R

$\vec{e}$

$\vec{e}_{soll}$ **2**

**Fig.1**

**Fig.2**

**Europäisches Patentamt**

# EUROPÄISCHER RECHERCHENBERICHT

Nummer der Anmeldung

EP 03 40 5291

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | MOHAMED A H ET AL: "Adaptive Kalman filtering for INS/GPS" JOURNAL OF GEODESY, MAY 1999, SPRINGER-VERLAG, GERMANY, Bd. 73, Nr. 4, Seiten 193-203, XP002257385 ISSN: 0949-7714 * Zusammenfassung * * Seite 195, rechte Spalte - Seite 198, linke Spalte * | 1-14 | G05B13/04 |
| X | DING Z ET AL: "Model-set adaptation using a fuzzy Kalman filter" MATHEMATICAL AND COMPUTER MODELLING, OCT. 2001, ELSEVIER, UK, Bd. 34, Nr. 7-8, Seiten 799-812, XP002257386 ISSN: 0895-7177 * Seite 805 - Seite 806 * | 1-14 | |
| A | SHELDON S N ET AL: "An optimizing design strategy for multiple model adaptive estimation and control" PROCEEDINGS OF THE 29TH IEEE CONFERENCE ON DECISION AND CONTROL (CAT. NO.90CH2917-3), HONOLULU, HI, USA, 5-7 DEC. 1990, Seiten 3522-3527 vol.6, XP002257387 1990, New York, NY, USA, IEEE, USA * Zusammenfassung * | 2 | **RECHERCHIERTE SACHGEBIETE (Int.Cl.7)** G05B |
| A | US 4 577 270 A (SATO YOSHIO ET AL) 18. März 1986 (1986-03-18) * Zusammenfassung * | 1-14 | |
| A | US 5 210 704 A (HUSSEINY ABDO A) 11. Mai 1993 (1993-05-11) * Spalte 7, Zeile 59 - Spalte 8, Zeile 27 * | 1-14 | |

Der vorliegende Recherchenbericht wurde für alle Patentansprüche erstellt

| Recherchenort | Abschlußdatum der Recherche | Prüfer |
|---|---|---|
| MÜNCHEN | 10. Oktober 2003 | Gerdes, R |

**EP 1 471 398 A1**

**ANHANG ZUM EUROPÄISCHEN RECHERCHENBERICHT**
**ÜBER DIE EUROPÄISCHE PATENTANMELDUNG NR.**

EP 03 40 5291

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 4577270 | A | 18-03-1986 | JP | 1027337 B | 29-05-1989 |
| | | | JP | 1549596 C | 09-03-1990 |
| | | | JP | 57016719 A | 28-01-1982 |
| | | | AU | 552901 B2 | 26-06-1986 |
| | | | AU | 7255581 A | 07-01-1982 |
| | | | CA | 1191234 A1 | 30-07-1985 |
| | | | DE | 3126331 A1 | 08-04-1982 |
| US 5210704 | A | 11-05-1993 | KEINE | | |

Für nähere Einzelheiten zu diesem Anhang : siehe Amtsblatt des Europäischen Patentamts, Nr.12/82

EPO FORM P0461

12